# EUROPEAN PATENT APPLICATION

(11) **EP 4 542 496 A1**
(43) Date of publication of application: **23.04.2025**
(21) Application number: 22946609.9
(22) Date of filing: 02.12.2022
(51) Int. Cl.: G06T 13/40

(54) **METHOD AND APPARATUS FOR GENERATING DIGITAL PERSON, METHOD AND APPARATUS FOR TRAINING MODEL, AND DEVICE AND MEDIUM**

(30) Priority: 15.06.2022 CN 202210681368
(71) Applicant: Beijing Baidu Netcom Science Technology Co., Ltd., Beijing 100085 (CN)
(72) Inventor: WU, Tian, Beijing 100085 (CN); LI, Yanhong, Beijing 100085 (CN); XIAO, Xinyan, Beijing 100085 (CN); LIU, Hao, Beijing 100085 (CN); LIU, Jiachen, Beijing 100085 (CN); SHE, Qiaoqiao, Beijing 100085 (CN); LV, Yajuan, Beijing 100085 (CN)
(74) Representative: von Tietzen und Hennig, Nikolaus
(86) International application number: PCT/CN2022/136340
(87) International publication number: WO 2023/240943

(57) **Abstract**

The present disclosure provides a digital human generation method, a model training method and apparatus, a device, and a medium, relates to the field of artificial intelligence, specifically to the technical fields of natural language processing, deep learning, computer vision, image processing, augmented reality, virtual reality, and the like, and can be applied to metaverse and other scenarios. An implementation solution is: obtaining material content; determining a plurality of scenarios from the material content based on a pre-trained scenario division model, where each of the plurality of scenarios corresponds to a content fragment of the material content that has complete semantic information; and for each of the plurality of scenarios, determining, based on a corresponding content fragment, target content corresponding to the scenario; determining scenario label information of the scenario based on the corresponding target content; and configuring a digital human specific to the scenario based on the scenario label information.

## Description

### CROSS-REFERENCE TO RELATED APPLICATIONS

The present application claims priority to Chinese Patent Application No. 202210681368.3 filed on June 15, 2022, which is incorporated herein by reference in its entirety.

### TECHNICAL FIELD

The present disclosure relates to the field of artificial intelligence, specifically to the technical fields of natural language processing, deep learning, computer vision, image processing, augmented reality, virtual reality, and the like, may be applied to metaverse and other scenarios, and in particular, relates to a digital human generation method, a neural network training method, a video generation apparatus, a neural network training apparatus, an electronic device, a computer-readable storage medium, and a computer program product.

### BACKGROUND ART

Artificial intelligence is a subject on making a computer simulate some thinking processes and intelligent behaviors (such as learning, reasoning, thinking, and planning) of a human, and involves both hardware-level technologies and software-level technologies. Artificial intelligence hardware technologies generally include the technologies such as sensors, dedicated artificial intelligence chips, cloud computing, distributed storage, and big data processing. Artificial intelligence software technologies mainly include the following several general directions: computer vision technologies, speech recognition technologies, natural language processing technologies, machine learning/deep learning, big data processing technologies, and knowledge graph technologies.

Digital human is a technology of virtual evaluation of a shape and a function of a human body by using computer technologies. Digital human can significantly improve the interactivity of applications and enhance the intelligence level of intelligent information services. With continuous breakthroughs of artificial intelligence technologies, a digital human is gradually comparable to a real human in terms of its image, facial expression, and verbal expression, has continuously expanding application scenarios, and thus has gradually become an important service form in the digital world.

Methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

### SUMMARY OF THE INVENTION

The present disclosure provides a digital human generation method, a neural network training method, a video generation apparatus, a neural network training apparatus, an electronic device, a computer-readable storage medium, and a computer program product.

According to an aspect of the present disclosure, a digital human generation method is provided, the method including: obtaining material content; determining a plurality of scenarios from the material content based on a pre-trained scenario division model, where each of the plurality of scenarios corresponds to a content fragment of the material content that has complete semantic information; and for each of the plurality of scenarios, determining, based on a corresponding content fragment, target content corresponding to the scenario; determining scenario label information of the scenario based on the corresponding target content; and configuring a digital human specific to the scenario based on the scenario label information.

According to another aspect of the present disclosure, a training method for a scenario division model is provided, the method including: obtaining sample material content and a plurality of sample scenarios in the sample material content; determining a plurality of predicted scenarios from the sample material content based on a preset scenario division model; and adjusting parameters of the preset scenario division model based on the plurality of sample scenarios and the plurality of predicted scenarios to obtain a trained scenario division model.

According to another aspect of the present disclosure, there is provided a digital human generation apparatus, the apparatus including: a first obtaining unit configured to obtain material content; a first determination unit configured to determine a plurality of scenarios from the material content based on a pre-trained scenario division model, where each of the plurality of scenarios corresponds to a content fragment of the material content that has complete semantic information; a second determination unit configured to: for each of the plurality of scenarios, determine, based on a corresponding content fragment, target content corresponding to the scenario; a third determination unit configured to determine scenario label information of the scenario based on the corresponding target content; and a digital human configuration unit configured to configure a digital human specific to the scenario based on the scenario label information.

According to another aspect of the present disclosure, a training apparatus for a scenario division model is provided, the apparatus including: a third obtaining unit configured to obtain sample material content and a plurality of sample scenarios in the sample material content; a seventh determination unit configured to determine a plurality of predicted scenarios from the sample material content based on a preset scenario division model; and a training unit configured to adjust parameters of the preset scenario division model based on the plurality of sample scenarios and the plurality of predicted scenarios to obtain a trained scenario division model.

According to another aspect of the present disclosure, there is provided an electronic device, including: at least one processor; and a memory communicatively connected to the at least one processor, where the memory stores instructions executable by the at least one processor, and the instructions, when executed by the at least one processor, cause the at least one processor to perform the method described above.

According to another aspect of the present disclosure, there is provided a non-transitory computer-readable storage medium storing computer instructions, where the computer instructions are used to cause a computer to perform the above method.

According to another aspect of the present disclosure, there is provided a computer program product, including a computer program, where when the computer program is executed by a processor, the above method is implemented.

According to one or more embodiments of the present disclosure, scenario segmentation is performed on material content, and a digital human is configured at a granularity of a scenario, so that consistency between the digital human, the scenario, and target content is ensured, thereby improving the integration between the material content and the digital human, and enhancing the user experience during watching the digital human.

It should be understood that the content described in this section is not intended to identify critical or important features of the embodiments of the present disclosure, and is not used to limit the scope of the present disclosure. Other features of the present disclosure will be easily understood through the following description.

### BRIEF DESCRIPTION OF THE DRAWINGS

The accompanying drawings exemplarily show embodiments and form a part of the specification, and are used to explain exemplary implementations of the embodiments together with a written description of the specification. The embodiments shown are merely for illustrative purposes and do not limit the scope of the claims. Throughout the accompanying drawings, the same reference numerals denote similar but not necessarily same elements.
FIG. 1 is a schematic diagram of an exemplary system in which various methods described herein can be implemented, according to an embodiment of the present disclosure;
FIG. 2 is a flowchart of a digital human generation method according to an embodiment of the present disclosure;
FIG. 3 is a flowchart of determining a plurality of scenarios from material content according to an embodiment of the present disclosure;
FIG. 4 is a flowchart of determining target content corresponding to each scenario according to an embodiment of the present disclosure;
FIG. 5 is a flowchart of a digital human generation method according to an embodiment of the present disclosure;
FIG. 6 is a flowchart of a training method for a scenario division model according to an embodiment of the present disclosure;
FIG. 7 is a structural block diagram of a digital human generation apparatus according to an embodiment of the present disclosure;
FIG. 8 is a structural block diagram of a first determination unit according to an embodiment of the present disclosure;
FIG. 9 is a structural block diagram of a second determination unit according to an embodiment of the present disclosure;
FIG. 10 is a structural block diagram of a digital human generation apparatus according to an embodiment of the present disclosure;
FIG. 11 is a structural block diagram of a training apparatus for a scenario division model according to an embodiment of the present disclosure; and
FIG. 12 is a structural block diagram of an exemplary electronic device that can be used to implement an embodiment of the present disclosure.

### DETAILED DESCRIPTION OF THE EMBODIMENTS

Exemplary embodiments of the present disclosure are described below in conjunction with the accompanying drawings, where various details of the embodiments of the present disclosure are included to facilitate understanding, and should only be considered as exemplary. Therefore, those of ordinary skill in the art should be aware that various changes and modifications can be made to the embodiments described herein, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one element from the other. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of listed items.

Video is one of the most important information carriers in the digital world. Naturally, digital humans have an important application space in video production. Currently, digital humans have begun to be used in video production, such as for news broadcasting, and digital human images are used for propaganda. However, in the related art, digital humans are used in videos based mainly on templates, for example, a fixed digital human is used for broadcasting. Therefore, during digital human broadcasting, there may be the cases that the digital human is inconsistent with content, and content that is broadcast does not match a digital human image, leading to a poor user experience. Some other related technologies focus on refined construction of digital human idols, mainly for the purpose of presenting digital human images. This method is usually oriented to some fictional and science fiction scenarios, and can hardly be used for broadcasting real information. In addition, these scenarios are mainly intended to present images, and therefore various attributes of digital humans are usually irrelevant to content that is broadcast.

To resolve the foregoing problems, in the present disclosure, scenario segmentation is performed on material content, and a digital human is configured at a granularity of a scenario, so that consistency between the digital human, the scenario, and target content is ensured, thereby improving integration between the material content and the digital human, and enhancing the user experience during watching the digital human.

The embodiments of the present disclosure will be described below in detail with reference to the accompanying drawings.

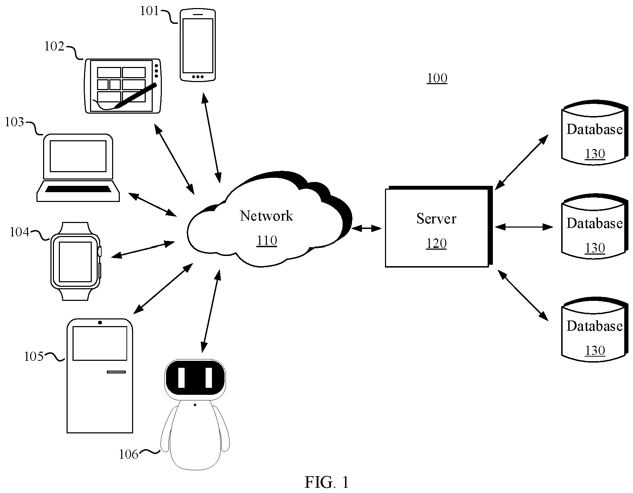

FIG. 1 is a schematic diagram of an exemplary system 100 in which various methods and apparatuses described herein can be implemented according to an embodiment of the present disclosure. Referring to FIG. 1, the system 100 includes one or more client devices 101, 102, 103, 104, 105, and 106, a server 120, and one or more communications networks 110 that couple the one or more client devices to the server 120. The client devices 101, 102, 103, 104, 105, and 106 may be configured to execute one or more applications.

In an embodiment of the present disclosure, the server 120 can run one or more services or software applications that enable a method for generating a digital human and/or a method for training a scenario division model to be performed.

In some embodiments, the server 120 may further provide other services or software applications that may include a non-virtual environment and a virtual environment. In some embodiments, these services may be provided as web-based services or cloud services, for example, provided to a user of the client device 101, 102, 103, 104, 105, and/or 106 in a software as a service (SaaS) model.

In the configuration shown in FIG. 1, the server 120 may include one or more components that implement functions performed by the server 120. These components may include software components, hardware components, or a combination thereof that can be executed by one or more processors. A user operating the client device 101, 102, 103, 104, 105, and/or 106 may sequentially use one or more client application programs to interact with the server 120, to use the services provided by these components. It should be understood that various different system configurations are possible, and may be different from that of the system 100. Therefore, FIG. 1 is an example of the system for implementing various methods described herein, and is not intended to be limiting.

The user may use the client device 101, 102, 103, 104, 105, and/or 106 to enter and generate parameters related to a digital human. The client device may provide an interface that enables the user of the client device to interact with the client device. The client device may also output information to the user via the interface, for example, output a digital human generation result to the user. Although FIG. 1 shows only six client devices, those skilled in the art will understand that any number of client devices are supported in the present disclosure.

The client device 101, 102, 103, 104, 105, and/or 106 may include various types of computer devices, such as a portable handheld device, a general-purpose computer (such as a personal computer and a laptop computer), a workstation computer, a wearable device, a smart screen device, a self-service terminal device, a service robot, a gaming system, a thin client, various messaging devices, and a sensor or other sensing devices. These computer devices can run various types and versions of software application programs and operating systems, such as MICROSOFT Windows, APPLE iOS, a UNIX-like operating system, and a Linux or Linux-like operating system (e.g., GOOGLE Chrome OS); or include various mobile operating systems, such as MICROSOFT Windows Mobile OS, iOS, Windows Phone, and Android. The portable handheld device may include a cellular phone, a smartphone, a tablet computer, a personal digital assistant (PDA), etc. The wearable device may include a head-mounted display (such as smart glasses) and other devices. The gaming system may include various handheld gaming devices, Internet-enabled gaming devices, etc. The client device can execute various different application programs, such as various Internet-related application programs, communication application programs (e.g., email application programs), and short message service (SMS) application programs, and can use various communication protocols.

The network 110 may be any type of network well known to those skilled in the art, and may use any one of a plurality of available protocols (including but not limited to TCP/IP, SNA, IPX, etc.) to support data communication. As a mere example, the one or more networks 110 may be a local area network (LAN), an Ethernet-based network, a token ring, a wide area network (WAN), the Internet, a virtual network, a virtual private network (VPN), an intranet, an extranet, a blockchain network, a public switched telephone network (PSTN), an infrared network, a wireless network (such as Bluetooth or Wi-Fi), and/or any combination of these and/or other networks.

The server 120 may include one or more general-purpose computers, a dedicated server computer (e.g., a personal computer (PC) server, a UNIX server, or a terminal server), a blade server, a mainframe computer, a server cluster, or any other suitable arrangement and/or combination. The server 120 may include one or more virtual machines running a virtual operating system, or other computing architectures related to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any one of the above operating systems and any commercially available server operating system. The server 120 can also run any one of various additional server application programs and/or middle-tier application programs, including an HTTP server, an FTP server, a CGI server, a JAVA server, a database server, etc.

In some implementations, the server 120 may include one or more application programs to analyze and merge data feeds and/or event updates received from users of the client device 101, 102, 103, 104, 105, and/or 106. The server 120 may further include one or more application programs to display the data feeds and/or real-time events via one or more display devices of the client device 101, 102, 103, 104, 105, and/or 106.

In some implementations, the server 120 may be a server in a distributed system, or a server combined with a blockchain. The server 120 may alternatively be a cloud server, or an intelligent cloud computing server or intelligent cloud host with artificial intelligence technologies. The cloud server is a host product in a cloud computing service system, to overcome the shortcomings of difficult management and weak service scalability in conventional physical host and virtual private server (VPS) services.

The system 100 may further include one or more databases 130. In some embodiments, these databases can be used to store data and other information. For example, one or more of the databases 130 can be configured to store information such as an audio file and a video file. The databases 130 may reside in various locations. For example, a database used by the server 120 may be locally in the server 120, or may be remote from the server 120 and may communicate with the server 120 via a network-based or dedicated connection. The database 130 may be of different types. In some embodiments, the database used by the server 120 may be, for example, a relational database. One or more of these databases can store, update, and retrieve data from or to the database, in response to a command.

In some embodiments, one or more of the databases 130 may also be used by an application to store application data. The database used by the application may be of different types, for example, may be a key-value repository, an object repository, or a regular repository backed by a file system.

The system 100 of FIG. 1 may be configured and operated in various manners, such that the various methods and apparatuses described according to the present disclosure can be applied.

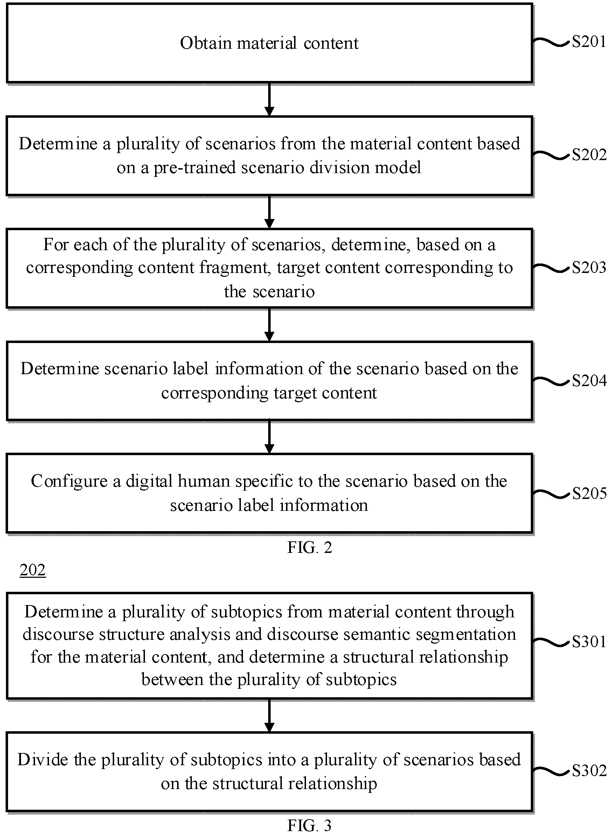

According to an aspect of the present disclosure, a digital human generation method is provided. As shown in FIG. 2, the method includes: step S201: obtaining material content; step S202: determining a plurality of scenarios from the material content based on a pre-trained scenario division model, where each of the plurality of scenarios corresponds to a content fragment of the material content that has complete semantic information; step S203: for each of the plurality of scenarios, determining, based on a corresponding content fragment, target content corresponding to the scenario; step S204: determining scenario label information of the scenario based on the corresponding target content; and step S205: configuring a digital human specific to the scenario based on the scenario label information.

In this way, scenario segmentation is performed on material content, and a digital human is configured at a granularity of a scenario, so that consistency between the digital human, the scenario, and target content is ensured, thereby improving the integration between the material content and the digital human, and enhancing the user experience during watching the digital human.

According to some embodiments, a user can set basic configuration options by using an application terminal (for example, any one of the clients 101 to 106 in FIG. 1) before digital human generation starts. Specifically, the following content may be set.

The method of the present disclosure may be applied to a variety of scenarios, such as a broadcasting scenario, a commentary scenario, and a hosting scenario. It can be understood that in the present disclosure, various methods of the present disclosure will be described by mainly taking the broadcasting scenario as an example, but this is not intended to limit the protection scope of the present disclosure.

In some embodiments, the user can select and configure a type of the material content. The type of the material content and a corresponding file, address, or content may include: (1) a text document, that is, a document that specifically includes text content or text and picture content; (2) an article URL, that is, a website address that corresponds to text and picture content and is expected to be used to generate a digital human; and (3) a topic keyword and descriptions that describe a topic for which a digital human is expected to be generated and that may include forms such as an entity word, a search keyword, and a search question. In some exemplary embodiments, the material content may include text data and at least one of image data and video data, to enrich content for broadcasting, hosting, or commentary by a digital human.

In some embodiments, the user can configure a text to speech (TTS) function, including choosing whether to enable the text to speech function, voice of text to speech (for example, a gender, an accent, etc.), a timbre, a volume, a speech rate, and the like.

In some embodiments, the user can configure background music, including choosing whether to add background music, a type of background music to be added, and the like.

In some embodiments, the user can set digital human assets, including selecting, from preset digital human assets, a digital human image that is expected to appear or to be used or generating a digital human image in a custom manner, to enrich the digital human assets.

In some embodiments, the user can configure digital human background, including choosing whether to add digital human background, a type of the digital human background (for example, an image or a video), and the like.

In some embodiments, the user can configure a manner in which a video is generated as a final presentation result, including the selection of fully-automatic video generation, human-computer interaction aided video generation, or the like.

It can be understood that, in addition to the foregoing content, input configuration may further provide the user with more system control, such as a copy compression proportion or a proportion of dynamic materials used in a final presentation result, depending on circumstances. This is not limited herein.

According to some embodiments, the obtaining material content in step S201 may include: obtaining the material content in at least one of the following manners of: obtaining the material content based on a web page address; or obtaining the material content based on a search keyword. The foregoing several different types of material content may be specifically obtained in the following manners.

For a text document, content in a locally or remotely stored text document is directly read.

For an article URL, which mainly refers to existing text and picture content on the Internet, for example, a URL of content such as a news article, a forum article, a Q&A page, an article from an official account, web page data corresponding to the URL is obtained based on an existing open source web page parsing solution, body text and picture content on the URL web page are obtained through parsing, and important raw information, such as a title, a main body, a paragraph, a bold font, a text and picture position relationship, and a table, is also recorded. The information is to be used in subsequent digital human generation processes. For example, the title may be used as a query for retrieving visual materials; the main body, the paragraph, and bold content may be used to generate broadcast content, and may be used to extract a scenario keyword and a sentence-level keyword; the text and picture position relationship may provide a correspondence between image materials in original text and the broadcast content; and the table can enrich representation forms of content in digital human presentation results. The content is described in detail below.

For a topic keyword and descriptions, the present system also supports generation of a final digital human presentation result based on topic descriptions entered by the user. A topic keyword and descriptions that are entered by the user may be entity words similar to encyclopedia entries, or may be a plurality of keywords, or may be in a form similar to event descriptions or problem descriptions. Text and picture content is obtained based on the topic keyword by means of: (1) entering the topic keyword or descriptions into a search engine, (2) obtaining a plurality of search results and returning same, (3) selecting, from the search results, text and picture results with a higher correlation ranking and richer visual materials as a main URL of a video to be generated, and (4) extracting information, such as text and picture content in the URL, in a URL content extraction manner.

After the material content is obtained, a copy for digital human broadcasting may be generated based on the material content. Scenario division, and text conversion and generation are performed according to a digital human broadcasting requirement based on the previously obtained material content through technologies such as semantic comprehension and text generation, to output a script copy required for digital human video/holographic projection production, and scenario division and semantic analysis information are also provided. The foregoing processing of the material content is a key basis for determining a digital human integration manner. Specifically, target content for digital human broadcasting may be generated in the following manner.

In some embodiments, in step S202, the plurality of scenarios are determined from the material content based on the pre-trained scenario division model. Each of the plurality of scenarios may correspond to a content fragment with complete semantic information in the material content. The material content is divided into the plurality of scenarios, so that different processing can be performed for different scenarios in subsequent digital human broadcasting. In the present disclosure, digital human integration is performed at a granularity of a scenario.

According to some embodiments, as shown in FIG. 3, the determining a plurality of scenarios from the material content based on a pre-trained scenario division model in step S202 may include : step S301: determining a plurality of subtopics from the material content through discourse structure analysis and discourse semantic segmentation for the material content, and determining a structural relationship between the plurality of subtopics; and step S302: dividing the plurality of subtopics into the plurality of scenarios based on the structural relationship. In this way, a plurality of semantically complete subtopics and a structural relationship therebetween can be accurately determined from the material content by using the methods of discourse structure analysis and discourse semantic segmentation, and the plurality of subtopics can be further divided into a plurality of scenarios suitable for digital human broadcasting tasks based on the structural relationship (for example, a deduction structure, a parallel structure, a progressive structure, etc.) between the subtopics.

In some embodiments, the scenario division model is obtained through pre-training, and may further include a discourse structure analysis model, a discourse semantic segmentation model, and a model for dividing subtopics into scenarios. These models may be rule-based models, or deep learning-based models, which is not limited herein. In an exemplary embodiment, the discourse semantic segmentation model can output a semantic relationship between a semantically complete content fragment and an adjacent content fragment (for example, a semantic similarity between two adjacent sentences in each set), the discourse structure analysis model can output a relationship (for example, a deduction relationship, a parallel relationship, a progressive relationship, etc.) between content fragments, and the two models are combined such that a position of a segmentation boundary obtained when the material content is divided into the plurality of subtopics and the relationship between the subtopics can be obtained. Further, the material content is divided only based on text (natural language processing) in the foregoing method, and an obtained division result may thus not be suitable for being directly used as a scenario for broadcasting. For example, content fragments corresponding to some subtopics are quite short, which may include only one sentence, and the use of such subtopics as scenarios may result in frequent transitions. Therefore, the plurality of subtopics may be further divided into the plurality of scenarios. In some embodiments, the plurality of subtopics may be further divided based on the structural relationship between the subtopics, or the plurality of subtopics may be further divided in another manner (for example, by using a rule-based method or a neural network method based on sequence labeling), which is not limited herein.

After the plurality of scenarios are obtained, target content (for example, broadcast text, commentary text, or host text) for each scenario may be determined. In some embodiments, a content fragment of the material content that has complete semantic information may be directly used as target content. In some other embodiments, the material content comes from complex sources and includes a large amount of content that is usually in written language. Therefore, directly using a content fragment for each scenario as target content for a digital human may have a poor effect. Corresponding target content may be obtained by performing the following processing on the material content and/or the content fragment.

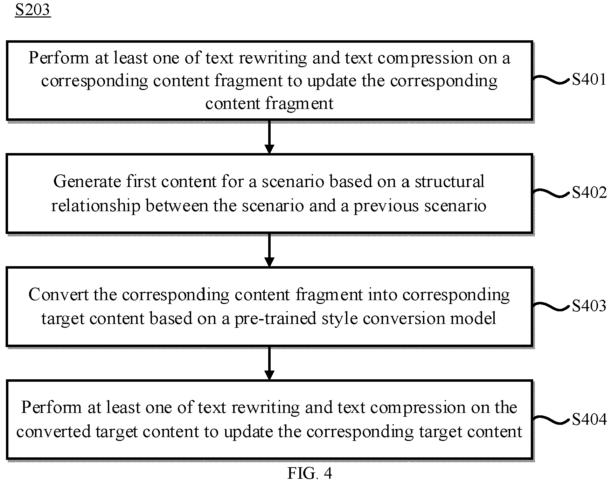

According to some embodiments, the processing such as text compression, text rewriting, and style conversion may be performed on the material content and/or the content fragment. In some embodiments, as shown in FIG. 4, for each of the plurality of scenarios, the determining, based on a corresponding content fragment, target content corresponding to the scenario in step S203 may include: step S401: performing at least one of text rewriting and text compression on the corresponding content fragment to update the corresponding content fragment. Depending on duration set by the user and content characteristics, concise and informative text results can be output as the target content for each scenario based on the overall material content and/or content of each content fragment. In some embodiments, the target content may be determined by using an extractive summarization algorithm, or by using a generative summarization algorithm, or by using another method, which is not limited herein.

According to some embodiments, as shown in FIG. 4, for each of the plurality of scenarios, the determining, based on a corresponding content fragment, target content corresponding to the scenario in step S203 may further include: step S402: generating first content for the scenario based on a structural relationship between the scenario and a previous scenario. In this way, the corresponding first content is generated based on the structural relationship between the scenarios, so that the switching between the scenarios can be made more coherent and the transition thereof more natural.

In some embodiments, the first content may be, for example, a transition word, a transition sentence, or other content capable of connecting a plurality of scenarios or indicating a relationship between scenarios, which is not limited herein.

According to some embodiments, as shown in FIG. 4, for each of the plurality of scenarios, the determining, based on a corresponding content fragment, target content corresponding to the scenario in step S203 may further include: step S403: converting the corresponding content fragment into the corresponding target content based on a pre-trained style conversion model, wherein the style conversion model is obtained through training based on prompt learning. In this way, the material content and/or the content fragments can be converted, through style conversion, into a style suitable for digital human broadcasting, and the pre-trained style conversion model can automatically output natural target content according to various characteristics and requirements of a digital human (for example, a colloquial requirement, characteristics (a gender, an accent setting, etc.) of the digital human, and a content transition requirement) by using the prompt-learning-based method. In some embodiments, the foregoing various characteristics and requirements may be converted into attribute control, which then jointly constitutes inputs for the prompt-learning-based style conversion model together with text to be subjected to style conversion (and optionally, context of the text) , and the model is trained by using samples with the foregoing structure (the attribute control and the text), so that the model can output an expected style conversion result. In some embodiments, a rule-based method (a colloquial word, a transition word, and the like are added) and a learning-based method may be combined to convert a content fragment for each scenario into target content suitable for a digital human broadcasting scenario.

According to some embodiments, as shown in FIG. 4, for each of the plurality of scenarios, the determining, based on a corresponding content fragment, target content corresponding to the scenario in step S203 may further include: step S404: performing at least one of text rewriting and text compression on the converted target content to update the corresponding target content. The operation of step S404 may be the same as that of step S401. It can be understood that one or both of steps S401 and S404 may be performed, and this is not limited herein.

In an exemplary embodiment, a plurality of scenarios and corresponding target content shown in Table 1 may be obtained by performing the foregoing steps on an article entitled "Build a 'City of Museums' and Promote the Construction of Six Museums in X City".

**Table 1**

| Scenario number | Scenario copy |
|---|---|
| 0 | Build a 'City of Museums' and Promote the Construction of Six Museums in X City |
| 1 | On March 2, a briefing on how to "Promote the Construction of a 'City of Museums' to Help Build a National Cultural Center" was held in X City. According to a related official of the city government, the construction of six museums such as a museum A and a natural history museum B is to be promoted. |
| 2 | According to the related official of the city government, there were a total of 204 registered museums of various types and 94 museums free to the public in X City by the end of 2021. The total number of collections of museums in X City has reached 16.25 million sets. The number of movable cultural relics and the number of third-grade (or above) precious cultural relics rank first in the country. 520 basic exhibitions are continuously open, more than 600 exhibitions are held every year on average, thousands of activities are carried out, and more than 50 million visitors are received every year on average. |
| 3 | According to the related official of the city government, the city government is to play an active role in fixed-asset investment, to strengthen resource integration and collaborative innovation, and increase support for museum construction. |
| 4 | The East Branch of X City Museum under construction has its facade unveiled, and is to be basically completed by the end of 2022. The city wall ruins protection and exhibition project is under rapid construction and is to be put into use in 2023. The XX museum reconstruction project, XX relics protection project, museum A renovation and upgrade project, and natural history museum B project are accelerating the preliminary work. |
| 5 | Implementation of these museums is to further optimize the layout of museums in X City, and promote the formation of a new pattern in development of museums with a reasonable layout, an optimized structure, distinctive characteristics, and complete functions. |

After the target content corresponding to each scenario is obtained, semantic analysis may be further performed on each scenario and the corresponding target content to obtain abundant scenario-related information used for retrieving and recalling video materials, aligning video materials with copies, displaying key information, and/or controlling a process of generating a digital human. Specifically, the following several semantic analysis manners may be included.

In some embodiments, scenario keyword extraction may be performed. To be specific, a keyword that can be used to describe core content of the entire scenario is automatically extracted. In the foregoing example, for scenario 1, keywords such as "City of Museums" and "X city" may be extracted for the scenario. These scenario keywords are used to construct a material retrieval query such as "X City, City of Museums", to recall related video materials.

In some embodiments, sentence-level keyword extraction may be performed. To be specific, a more fine-grained keyword is extracted at a sentence level. In the foregoing example, for the sentence "The East Branch of X City Museum under construction has its facade unveiled, and is to be basically completed by the end of 2022" in scenario 4, a sentence-level keyword "East Branch of X City Museum" may be automatically extracted, which may be used for aligning video materials with content (copies) more accurately, in addition to being used for constructing a material retrieval query.

**In** some embodiments, information extraction may be performed to obtain a result in a key-value form (namely, a key-value pair) that is expressed in content. **In** the foregoing example, for scenario 2, a plurality of key-value pairs may be automatically extracted, such as "the number of registered museums of various types in X city: 204", "the number of museums free to the public: 94", and "the total number of collections of regional museums in X City: 16.25 million sets". Based on the extracted key information, more accurate and abundant digital human broadcasting materials, such as a display board in background of a digital human broadcasting scenario, may be automatically generated, to significantly improve the overall quality and presentation effect of digital human broadcasting. According to some embodiments, the digital human generation method may further include: for each of the plurality of scenarios, extracting information in a key-value form from target content corresponding to the scenario; and generating an auxiliary material for a final digital human presentation result based on the information in the key-value form. **In** this way, more accurate and abundant visual materials for a digital human can be obtained.

**In** some embodiments, sentiment analysis may be performed to output a core emotional tendency expressed by each material. **In** the foregoing example, for scenario 5, the vigorous development of museums in X City is described in the entire scenario, and the overall tone, emotion, and mood are positive. Based on results of such sentiment analysis, a facial expression, a tone, and an action of a digital human can be controlled in more varied manners. According to some embodiments, the scenario label information may include a semantic label, and the determining scenario label information of the scenario based on the corresponding target content in step S204 may include: performing sentiment analysis on the corresponding target content to obtain the semantic label. In this way, information such as a tone and an emotion for the scenario can be obtained through sentiment analysis of the target content.

**In** some embodiments, the semantic label is used to identify an emotion expressed by the corresponding target content, which may include: positive, neutral, or negative. It can be understood that the semantic label may identify more varied emotions, such as nervousness, joyfulness, and anger. This is not limited herein. **In** some embodiments, the semantic label may further include other content, for example, may include a text semantic feature of the target content that is directly extracted, a type of the target content (for example, narrative, critical, lyrical, etc.), and other labels capable of reflecting semantically relevant information of a scenario and the corresponding target content. This is not limited herein.

In some embodiments, in addition to the foregoing manner, sentiment analysis may be performed on the scenario and the corresponding target content in other manners, to obtain related information. For example, a text semantic feature of the target content may be directly extracted and used as input information for subsequent digital human attribute planning.

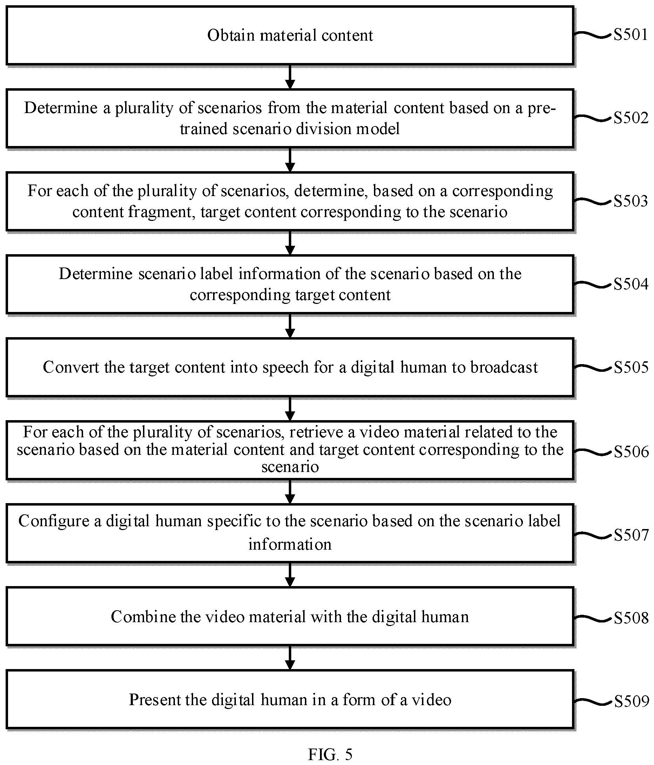

After the target content corresponding to each scenario is obtained, speech synthesis may be further performed. Speech synthesis aims to generate a sound for a digital human scenario, that is, the previously obtained target content is converted into speech, and optionally, background music is added to digital human broadcasting. Text can be converted into speech by calling a TTS service. In some embodiments, as shown in FIG. 5, the digital human generation method may further include: step S505: converting the target content into speech for the digital human to broadcast. It can be understood that the operations of steps S501 to S504 and S507 in FIG. 5 are similar to those of steps S201 to S205 in FIG. 2, and will not be described in detail herein again.

For background music, the system may call TTS capabilities with different tones or timbres and different styles of background music depending on the type of the target content (for example, narrative, critical, lyrical, etc.). In addition, in the foregoing method of the present disclosure, the user can specify TTS, background music, and the like. The system may provide TTS and background music with a variety of tones, timbres, and speech rates for the user to choose, and allow the user to actively customize an exclusive TTS timbre.

To produce digital human broadcasting presentation results with abundant visual materials, material expansion may be performed to supplement videos, images, and other materials for broadcasting by the digital human. The supplement ed video and image materials include the following content.

According to some embodiments, as shown in FIG. 5, the digital human generation method may further include: step S506: for each of the plurality of scenarios, retrieving a video material related to the scenario based on the material content and target content corresponding to the scenario; and step S508: combining the video material with the digital human. Therefore, in this manner, it is possible to retrieve materials consistent with and closely related to a scenario and corresponding target content, thereby enriching visual content in digital human broadcasting presentation results and improving the user experience during watching.

In some embodiments, one or more search keywords may be constructed based on the title of the material content and the above-mentioned scenario keyword, sentence-level keyword, and the like, and then videos related to the content can be obtained through online network-wide picture/video searching and from offline picture/video libraries. Then the obtained video content may be split by using, for example, a video stripping algorithm, to obtain candidate visual material fragments. It can be understood that, during implementation of the method of the present disclosure, video retrieval and video splitting may be performed in various manners to obtain the candidate visual material fragments. This is not limited herein.

According to some embodiments, for each of the plurality of scenarios, the retrieving a video material related to the scenario based on the material content and target content corresponding to the scenario in step S506 may include: extracting a scenario keyword; and retrieving a video material related to the scenario based on the scenario keyword. Therefore, in the foregoing manner, a video material related to the entire scenario can be obtained, which enriches available video materials.

According to some embodiments, for each of the plurality of scenarios, the retrieving a video material related to the scenario based on the material content and target content corresponding to the scenario in step S506 may include: extracting a sentence-level keyword; and retrieving a video material related to the scenario based on the sentence-level keyword. Therefore, in the foregoing manner, a video material related to a sentence in the target content can be obtained, which enriches available video materials.

In some embodiments, a dynamic report may be generated based on structured data in the target content, or the target content may be processed by using a method for generating pictures and/or videos from text based on a deep learning model, to further enrich video materials.

In some embodiments, after target content, speech, and image and video materials corresponding to a scenario and the target content are obtained, these visual materials may be aligned with text and speech for synthesis in a rendering and generation stage. In specific implementation, correlation calculation and sorting are mainly performed on text and visual materials based on image-text matching of a pre-trained model, to find corresponding subtitles for each fragment of text and matching video and picture content within a TTS speech time period, and align a speech-subtitle-video timeline. It can be understood that the user may adjust the timeline during this process to implement manual alignment.

According to some embodiments, the digital human generation method may further include: aligning the retrieved video material with the target content based on the sentence-level keyword. The video material retrieved based on the sentence-level keyword may correspond to a sentence in the target content. Therefore, a fragment of target content may correspond to a plurality of video materials retrieved based on sentence-level keywords. In such embodiments, a plurality of sentence-level keywords in the target content may be used to align their respective video materials with their respective sentences.

In an exemplary embodiment, in the example shown in Table 1, sentence-level keywords of a plurality of sentences in scenario 4 are respectively "East Branch of X City Museum", "city wall ruins", and "XX museum, XX relics, museum A, and natural history museum B". After a search is performed based on a sentence-level keyword corresponding to each sentence, corresponding image or video materials may be obtained. Then, based on a correspondence between the sentence-level keywords and the plurality of sentences and a correspondence between the sentence-level keywords and the video materials, the video materials may be aligned with the sentences. In this way, when a digital human is reading each sentence, a corresponding video material can be displayed in a scenario, and the video material can be switched in a gap between sentences.

It can be understood that material expansion may not be performed if raw material content includes abundant materials or if it is determined that digital human generation results do not need to be combined with the visual materials.

So far, preparations for digital human synthesis are all completed. Digital human synthesis may allow an appropriate digital human presentation mode to be planned for each scenario based on the foregoing scenario analysis and optionally, a material supplementation result, to ensure that a final presentation result has good interactivity, and to provide the user with a good immersive experience. Digital human synthesis specifically includes the following content.

In some embodiments, whether to trigger a digital human, that is, whether to generate a digital human for a current scenario, may be determined. A core consideration for triggering mainly lies in a position of a scenario in a video and material abundance corresponding to the scenario. The material abundance herein mainly means a proportion of highly relevant dynamic materials in playback duration of the entire scenario. In addition to the foregoing factors, definition and coherence of materials and relevance between the materials and the scenario may be used as factors for determining whether to trigger a digital human. Based on the foregoing factors, the system may allow the user to define a rule, or may automatically determine, based on a machine learning method, whether to trigger a digital human. It can be understood that specific trigger logic is not limited in the present disclosure. During implementation of the method of the present disclosure, corresponding trigger logic may be set, as required, in the foregoing manner, or a machine learning model may be trained by using samples that meet corresponding trigger logic. This is not limited herein.

According to some embodiments, the digital human generation method further includes: determining a proportion of playback duration required for a scenario corresponding to the video material; and determining, based on the proportion, whether to trigger the digital human in the corresponding scenario. In this way, whether to trigger a digital human is determined based on the abundance of video materials.

In some embodiments, digital human attribute planning may be performed after it is determined that a digital human is to be triggered. The digital human attribute planning mainly involves determining attributes such as clothing, a posture, an action, a facial expression, and background of the digital human based on a series of content features. The content features may include a semantic label of a scenario (for example, a tone, an emotion, a semantic feature, a type, etc. of target content), a key trigger word in broadcast content, content characteristics of visual materials, and the like. In specific implementation, the attributes of the digital human may be determined based on the foregoing content features by using a rule-based method, and attribute configurations of the digital human may also be predicted by using the content features as input based on a deep learning method.

In some embodiments, a mapping relationship between a key trigger word and a specific posture, action, or facial expression of the digital human may be established, so that the digital human makes, or has a specific probability of making, a corresponding posture, action, or facial expression after detecting the key trigger word. It can be understood that the digital human may be enabled, by using the rule-based method, to definitely respond in a specific manner after detecting the key trigger word, or a model may learn a large quantity of samples to obtain a relationship between the key trigger word and a specific posture, action, or facial expression of the digital human. This is not limited herein.

In some embodiments, content characteristics of visual materials, such as definition and coherence of the materials and relevance between the materials and a scenario, may also be used as content features to be considered during the digital human attribute planning. In addition, specific content in the visual materials may trigger specific postures, actions, facial expressions, etc. of the digital human. According to some embodiments, the digital human generation method may further include: in response to determining that the video material comprises a specific material, determining an action of the digital human based on a display position of the specific material in the video material. In this way, content in the video material is analyzed, and the specific material of the video material is combined with the action of the digital human, so that consistency between the video material, the target content, and the digital human can be further improved, and the user experience during watching can be improved.

In some embodiments, the specific material may include, for example, a table, a legend, or a picture-in-picture.

In some embodiments, the role, such as a keynote paragraph or a concluding paragraph, of each scenario in the material content (raw text content or text and picture content) can be further obtained based on discourse analysis results. Based on these pieces of information, camera movement and an action of the digital human and a specific display form (studio, picture-in-picture, or the like) of the digital human can be controlled in more varied manners.

In some embodiments, a semantic label of a scenario (for example, a tone and an emotion for the scenario) that is obtained through sentiment analysis may be used as a content feature to be considered during the digital human attribute planning. According to some embodiments, for each of the plurality of scenarios, the configuring a digital human specific to the scenario based on the scenario label information in step S507 may include: configuring at least one of clothing, a facial expression, and an action of the digital human based on the semantic label.

The semantic label of the scenario may be further used to determine a tone of the digital human. According to some embodiments, for each of the plurality of scenarios, the configuring a digital human specific to the scenario based on the scenario label information in step S507 may include: configuring a tone for the speech of the digital human based on the semantic label. In some embodiments, the tone for the speech of the digital human may include, for example, a volume, a pitch, an intonation, etc. for the speech of the digital human. In addition, these semantic labels may be further used for other purposes during digital human configuration, for example, for configuring studio background of a more suitable style for the scenario.

In some embodiments, the attributes of the digital human may include attributes such as clothing, a posture, an action, a facial expression, and background of the digital human. Specifically, for planning for each attribute, options may be first manually set for each type of attribute of the digital human. For example, different options, such as "formal wear", "casual wear", and "shirt", may be manually defined for the "clothing" attribute. Based on these manually defined category systems, various features such as text features (a word feature, a phrase feature, a sentence feature, etc.), a digital human ID, and a digital human gender are modeled based on manually labeled training data by using a classification algorithm in machine learning, so that the model fits manually labeled signals based on the features until model training converges. In a prediction stage, model prediction can be performed on extracted features to obtain a plan for different attributes.

In some embodiments, a digital human generation result may be presented after the digital human generation result is obtained. The digital human generation method may further include: presenting the digital human in a form of a holographic image. In this way, a digital human generation result that can ensure consistency between the digital human and the target content is provided.

In some embodiments, after the video material and the digital human generation result are obtained, step S508 may be performed to combine the video material with the digital human, and then video rendering is performed to obtain a final video. As shown in FIG. 5, the digital human generation method may further include: step S509: presenting the digital human in a form of a video. In this way, another digital human generation result that can ensure consistency between the digital human and the target content is provided, which improves the vividness of a video generation result and an immersive user experience, and also takes full advantage of the digital human to make up for the insufficiency of related materials through interaction between the digital human and video materials. In addition, the method of the present disclosure is designed for general scenarios, is compatible with different types of content, and is generally applicable to all fields.

In some embodiments, the present disclosure supports end-to-end automatic generation, and also supports generation through interaction with a user. To be specific, the user can adjust a generated video result. In an interactive generation scenario, a user may adjust various elements of a video, such as text, speech, materials, and virtual human configurations. In the interactive generation manner, the user can make modifications to produce a higher-quality result. In addition, data generated through interaction with the user is also recorded as feedback data for system optimization, to guide model learning in each step and continuously improve the system effect.

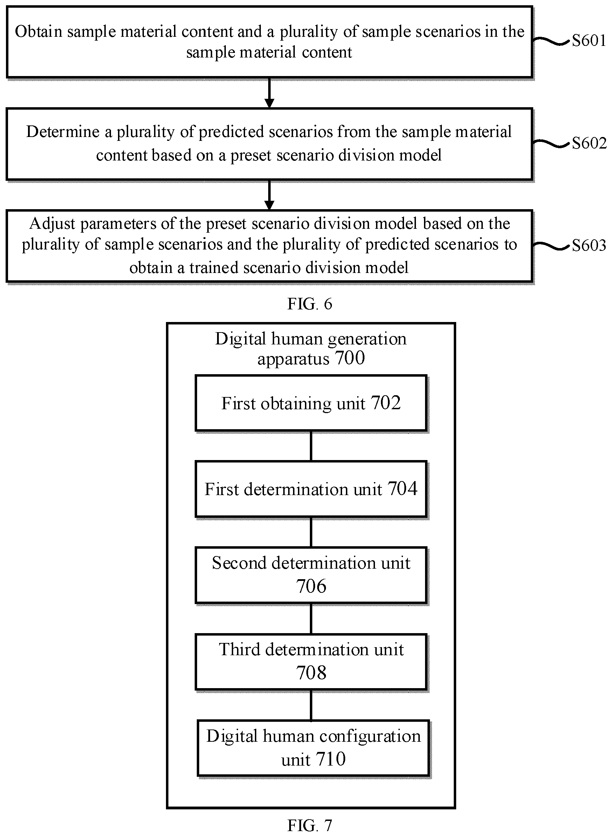

According to another aspect of the present disclosure, a training method for a scenario division model is provided. As shown in FIG. 6, the training method includes: step S601: obtaining sample material content and a plurality of sample scenarios in the sample material content; step S602: determining a plurality of predicted scenarios from the sample material content based on a preset scenario division model; and step S603: adjusting parameters of the preset scenario division model based on the plurality of sample scenarios and the plurality of predicted scenarios to obtain a trained scenario division model. In this way, the scenario division model can be trained in the foregoing manner, so that the trained model can output an accurate scenario division result, to improve the user experience during watching a final presentation result obtained through digital human generation based on the scenario division result.

It can be understood that the sample material content is similar to the material content obtained in step S201. The plurality of sample scenarios in the sample material content may be obtained by dividing the sample material content manually or by using a method based on a template or a neural network model, and may be used as ground truth of the division of the sample material content. Training is performed by using prediction results and the ground truth, so that the trained scenario division model is capable of performing scenario division on material content. It can be understood that, during implementation of the method of the present disclosure, a corresponding neural network may be selected as the scenario division model as required, and a corresponding loss function is used for training. This is not limited herein.

According to some embodiments, the preset scenario division model may include a discourse semantic segmentation model and a discourse structure analysis model. The determining a plurality of predicted scenarios from the sample material content based on a preset scenario division model in step S602 includes: processing the sample material content by using the discourse semantic segmentation model and the discourse structure analysis model, to determine a plurality of predicted subtopics in the material content and a predicted structural relationship between the plurality of predicted subtopics; and dividing the plurality of predicted subtopics into the plurality of predicted scenarios based on the predicted structural relationship. In this way, the discourse structure analysis model and the discourse semantic segmentation model are trained, so that the trained models can accurately determine a plurality of semantically complete subtopics and a structural relationship therebetween from the material content, and the plurality of subtopics can be further divided into a plurality of scenarios suitable for digital human broadcasting tasks based on the structural relationship (for example, a deduction structure, a parallel structure, a progressive structure, etc.) between the subtopics.

It can be understood that, in addition to the scenario division model, other models used in the method in FIG. 1 or FIG. 5 may be trained. For example, a model for dividing subtopics into scenarios, a model for generating target content (a model for text rewriting, text compression, and/or style conversion), a model for performing sentiment analysis on a scenario, a scenario keyword/sentence-level keyword extraction model, and a digital human attribute planning model are trained. In some embodiments, these models, including the scenario division model, may be trained by using labeled corpus or user interaction data.

According to another aspect of the present disclosure, a digital human generation apparatus is provided. As shown in FIG. 7, the digital human generation apparatus 700 includes: a first obtaining unit 702 configured to obtain material content; a first determination unit 704 configured to determine a plurality of scenarios from the material content based on a pre-trained scenario division model, where each of the plurality of scenarios corresponds to a content fragment of the material content that has complete semantic information; a second determination unit 706 configured to: for each of the plurality of scenarios, determine, based on a corresponding content fragment, target content corresponding to the scenario; a third determination unit 708 configured to determine scenario label information of the scenario based on the corresponding target content; and a digital human 710 configuration unit configured to configure a digital human specific to the scenario based on the scenario label information. It can be understood that the operations performed by the units 702 to 710 in the apparatus 700 are respectively similar to the operations of steps S201 to S205 in FIG. 2, and will not be described in detail herein again.

According to some embodiments, the material content may include text data and at least one of image data and video data.

According to some embodiments, the first obtaining unit 702 may be further configured to obtain the material content in at least one of the following manners of: obtaining the material content based on a web page address; or obtaining the material content based on a search keyword.

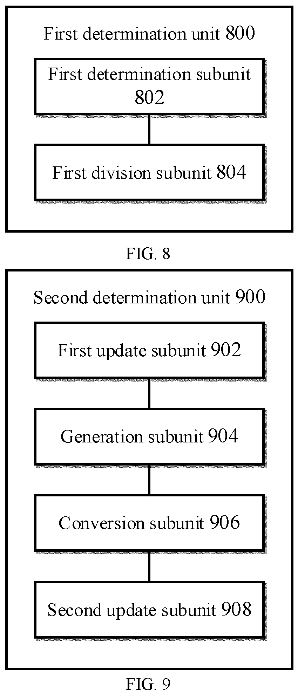

According to some embodiments, as shown in FIG. 8, the first determination unit 800 includes: a first determination subunit 802 configured to determine a plurality of subtopics from the material content through discourse structure analysis and discourse semantic segmentation for the material content, and determine a structural relationship between the plurality of subtopics; and a first division subunit 804 configured to divide the plurality of subtopics into the plurality of scenarios based on the structural relationship.

According to some embodiments, as shown in FIG. 9, the second determination unit 900 may include at least one of the following: a first update subunit 902 configured to perform at least one of text rewriting and text compression on the corresponding content fragment to update the corresponding content fragment; and a second update subunit 908 configured to perform at least one of text rewriting and text compression on the converted target content to update the corresponding target content.

According to some embodiments, as shown in FIG. 9, the second determination unit 900 may include: a generation subunit 904 configured to generate first content for the scenario based on a structural relationship between the scenario and a previous scenario.

According to some embodiments, as shown in FIG. 9, the second determination unit 900 may include: a conversion subunit 906 configured to convert the corresponding content fragment into the corresponding target content based on a pre-trained style conversion model, wherein the style conversion model is obtained through training based on prompt learning.

According to some embodiments, the digital human generation apparatus 700 may further include: an extraction unit configured to: for each of the plurality of scenarios, extract information in a key-value form from target content corresponding to the scenario; and a generation unit configured to generate an auxiliary material for the video based on the information in the key-value form.

According to some embodiments, the third determination unit 708 may include: a sentiment analysis subunit configured to perform sentiment analysis on the corresponding target content to obtain the semantic label.

According to some embodiments, the semantic label may be used to identify an emotion expressed by the corresponding target content, including: positive, neutral, or negative.

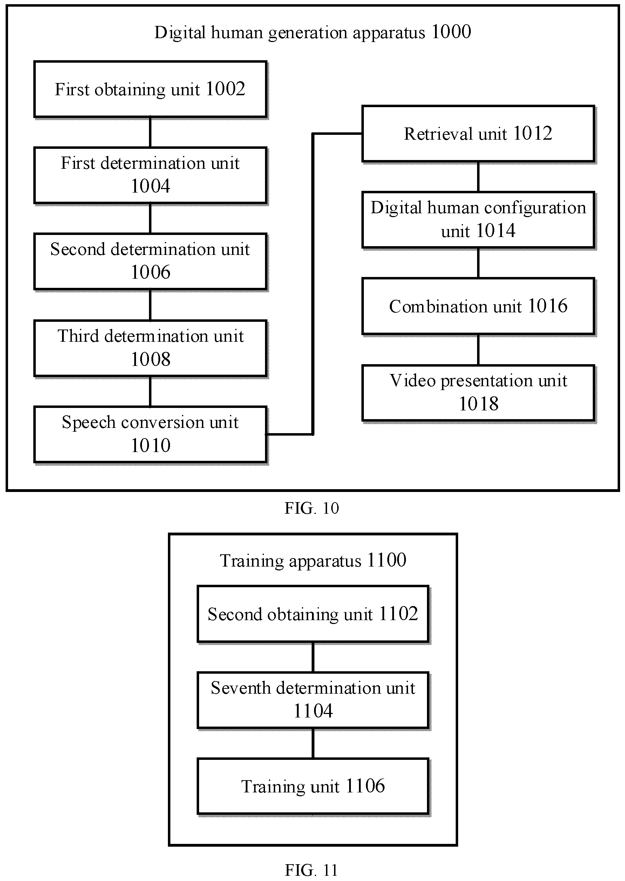

According to some embodiments, as shown in FIG. 10, a digital human generation apparatus 1000 may include: a speech conversion unit 1010 configured to convert the target content into speech for the digital human to broadcast. Operations of units 1002 to 1008 and 1014 in the apparatus 1000 are respectively similar to the operations of the units 702 to 710 in the apparatus 700, and will not be described in detail herein again.

According to some embodiments, as shown in FIG. 10, a digital human generation apparatus 1000 may include: a retrieval unit 1012 configured to: for each of the plurality of scenarios, retrieve a video material related to the scenario based on the material content and target content corresponding to the scenario; and a combination unit 1016 configured to combine the video material with the digital human.

According to some embodiments, the retrieval unit 1012 may include: a first extraction subunit configured to extract a scenario keyword; and a first retrieval subunit configured to retrieve a video material related to the scenario based on the scenario keyword.

According to some embodiments, the retrieval unit 1012 may further include: a second extraction subunit configured to extract a sentence-level keyword; and a second retrieval subunit configured to retrieve a video material related to the scenario based on the sentence-level keyword.

According to some embodiments, the digital human generation apparatus 1000 may further include: an alignment unit configured to align the retrieved video material with the target content based on the sentence-level keyword.

According to some embodiments, the digital human generation apparatus 1000 may further include: a fifth determination unit configured to determine a proportion of playback duration required for a scenario corresponding to the video material; and a sixth determination unit configured to determine, based on the proportion, whether to trigger the digital human in the corresponding scenario.

According to some embodiments, the digital human generation apparatus 1000 may further include: a fourth determination unit configured to: in response to determining that the video material comprises a specific material, determine an action of the digital human based on a display position of the specific material in the video material.

According to some embodiments, the digital human configuration unit 1014 may include: a first configuration subunit configured to configure at least one of clothing, a facial expression, and an action of the digital human based on the semantic label.

According to some embodiments, the digital human configuration unit 1014 may further include: a second configuration subunit configured to configure a tone for the speech of the digital human based on the semantic label.

According to some embodiments, the digital human generation apparatus 1000 may further include: a holographic image presentation unit configured to present the digital human in a form of a holographic image.

According to some embodiments, the digital human generation apparatus 1000 may further include: a video presentation unit 1018 configured to present the digital human in a form of a video.

According to another aspect of the present disclosure, a training apparatus for a scenario division model is provided. As shown in FIG. 11, the training apparatus 1100 includes: a second obtaining unit 1102 configured to obtain sample material content and a plurality of sample scenarios in the sample material content; a seventh determination unit 1104 configured to determine a plurality of predicted scenarios from the sample material content based on a preset scenario division model; and a training unit 1106 configured to adjust parameters of the preset scenario division model based on the plurality of sample scenarios and the plurality of predicted scenarios to obtain a trained scenario division model.

According to some embodiments, the preset scenario division model may include a discourse semantic segmentation model and a discourse structure analysis model. The seventh determination unit 1104 may include: a second determination subunit configured to process the sample material content by using the discourse semantic segmentation model and the discourse structure analysis model, to determine a plurality of predicted subtopics in the material content and a predicted structural relationship between the plurality of predicted subtopics; and a second division subunit configured to divide the plurality of predicted subtopics into the plurality of predicted scenarios based on the predicted structural relationship.

In the technical solutions of the present disclosure, collection, storage, use, processing, transmission, provision, disclosure, etc. of user personal information involved all comply with related laws and regulations and are not against the public order and good morals.

According to the embodiments of the present disclosure, an electronic device, a readable storage medium, and a computer program product are further provided.

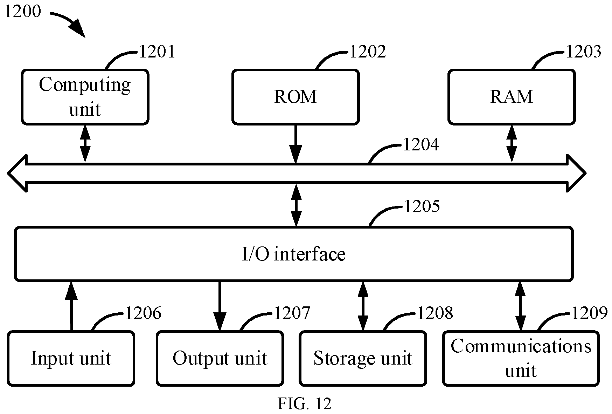

Referring to FIG. 12, a structural block diagram of an electronic device 1200 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 12, the electronic device 1200 includes a computing unit 1201. The computing unit may perform various appropriate actions and processing according to a computer program stored in a read-only memory (ROM) 1202 or a computer program loaded from a storage unit 1208 to a random access memory (RAM) 1203. The RAM 1203 may further store various programs and data required for the operation of the electronic device 1200. The computing unit 1201, the ROM 1202, and the RAM 1203 are connected to each other through a bus 1204. An input/output (I/O) interface 1205 is also connected to the bus 1204.

A plurality of components in the electronic device 1200 are connected to the I/O interface 1205, including: an input unit 1206, an output unit 1207, the storage unit 1208, and a communications unit 1209. The input unit 1206 may be any category of device capable of entering information to the electronic device 1200. The input unit 1206 may receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 1207 may be any category of device capable of presenting information, and may include, but is not limited to, a display, a speaker, a video/audio output terminal, a vibrator, and/or a printer. The storage unit 1208 may include, but is not limited to, a magnetic disk and an optical disk. The communications unit 1209 allows the electronic device 1200 to exchange information/data with other devices via a computer network such as the Internet and/or various telecommunications networks, and may include, but is not limited to, a modem, a network interface card, an infrared communications device, a wireless communications transceiver, and/or a chipset, for example, a Bluetooth^{™} device, an 802.11 device, a WiFi device, a WiMax device, or a cellular communications device.

The computing unit 1201 may be various general-purpose and/or special-purpose processing components with processing and computing capabilities. Some examples of the computing unit 1201 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 1201 performs the various methods and processing described above, for example, the digital human generation method and the training method for a scenario division model. For example, in some embodiments, the digital human generation method and the training method for a scenario division model may be each implemented as a computer software program, which is tangibly contained in a machine-readable medium, such as the storage unit 1208. In some embodiments, a part or all of the computer program may be loaded and/or installed onto the electronic device 1200 via the ROM 1202 and/or the communications unit 1209. When the computer program is loaded onto the RAM 1203 and executed by the computing unit 1201, one or more steps of the digital human generation method and the training method for a scenario division model described above can be performed. Alternatively, in other embodiments, the computing unit 1201 may be configured, in any other suitable manner (for example, by means of firmware), to perform the digital human generation method and the training method for a scenario division model.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: The systems and technologies are implemented in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other categories of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), the Internet, and a blockchain network.

A computer system may include a client and a server. The client and the server are generally far away from each other and usually interact through a communications network. A relationship between the client and the server is generated by computer programs running on respective computers and having a client-server relationship with each other. The server may be a cloud server, a server in a distributed system, or a server combined with a blockchain.

It should be understood that steps may be reordered, added, or deleted based on the various forms of procedures shown above. For example, the steps recorded in the present disclosure may be performed in parallel, in order, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, system, and device described above are merely exemplary embodiments or examples, and the scope of the present invention is not limited by the embodiments or examples, but defined only by the granted claims and the equivalent scope thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

## Claims

1. A digital human generation method, comprising:
obtaining material content;
determining a plurality of scenarios from the material content based on a pre-trained scenario division model, wherein each of the plurality of scenarios corresponds to a content fragment of the material content that has complete semantic information; and
for each of the plurality of scenarios,
determining, based on a corresponding content fragment, target content corresponding to the scenario;
determining scenario label information of the scenario based on the corresponding target content; and
configuring a digital human specific to the scenario based on the scenario label information.

2. The method according to claim 1, wherein the obtaining material content comprises obtaining the material content in at least one of the following manners of:
obtaining the material content based on a web page address; or
obtaining the material content based on a search keyword.

3. The method according to claim 1 or 2, wherein the material content comprises text data and at least one of image data and video data.

4. The method according to any one of claims 1 to 3, wherein the determining a plurality of scenarios from the material content based on a pre-trained scenario division model comprises:
determining a plurality of subtopics from the material content through discourse structure analysis and discourse semantic segmentation for the material content, and determining a structural relationship between the plurality of subtopics; and
dividing the plurality of subtopics into the plurality of scenarios based on the structural relationship.

5. The method according to claim 4, wherein for each of the plurality of scenarios, the determining, based on a corresponding content fragment, target content corresponding to the scenario comprises:
generating first content for the scenario based on a structural relationship between the scenario and a previous scenario.

6. The method according to claim 4 or 5, wherein for each of the plurality of scenarios, the determining, based on a corresponding content fragment, target content corresponding to the scenario comprises:
converting the corresponding content fragment into the corresponding target content based on a pre-trained style conversion model, wherein the style conversion model is obtained through training based on prompt learning.

7. The method according to claim 6, wherein for each of the plurality of scenarios, the determining, based on a corresponding content fragment, target content corresponding to the scenario further comprises at least one of the following:
performing at least one of text rewriting and text compression on the corresponding content fragment to update the corresponding content fragment; and
performing at least one of text rewriting and text compression on the converted target content to update the corresponding target content.

8. The method according to any one of claims 1 to 7, wherein the scenario label information comprises a semantic label, and for each of the plurality of scenarios, the determining scenario label information of the scenario based on the corresponding target content comprises:
performing sentiment analysis on the corresponding target content to obtain the semantic label.

9. The method according to claim 8, wherein the semantic label is used to identify an emotion expressed by the corresponding target content, including: positive, neutral, or negative.

10. The method according to claim 8 or 9, wherein for each of the plurality of scenarios, the configuring a digital human specific to the scenario based on the label information comprises:
configuring at least one of clothing, a facial expression, and an action of the digital human based on the semantic label.

11. The method according to claim 10, further comprising:
converting the target content into speech for the digital human to broadcast.

12. The method according to claim 11, wherein for each of the plurality of scenarios, the configuring a digital human specific to the scenario based on the scenario label information further comprises:
configuring a tone for the speech of the digital human based on the semantic label.

13. The method according to any one of claims 1 to 12, further comprising:
presenting the digital human in a form of a holographic image.

14. The method according to any one of claims 1 to 12, further comprising:
presenting the digital human in a form of a video.

15. The method according to claim 14, further comprising:
for each of the plurality of scenarios,
retrieving a video material related to the scenario based on the material content and target content corresponding to the scenario; and
combining the video material with the digital human.

16. The method according to claim 15, wherein for each of the plurality of scenarios, the retrieving a video material related to the scenario based on the material content and target content corresponding to the scenario comprises:
extracting a scenario keyword; and
retrieving a video material related to the scenario based on the scenario keyword.

17. The method according to claim 15 or 16, wherein for each of the plurality of scenarios, the retrieving a video material related to the scenario based on the material content and target content corresponding to the scenario comprises:
extracting a sentence-level keyword; and
retrieving a video material related to the scenario based on the sentence-level keyword.

18. The method according to claim 17, further comprising:
aligning the retrieved video material with the target content based on the sentence-level keyword.

19. The method according to any one of claims 15 to 18, further comprising:
in response to determining that the video material comprises a specific material, determining an action of the digital human based on a display position of the specific material in the video material.

20. The method according to any one of claims 14 to 19, further comprising:
for each of the plurality of scenarios,
extracting information in a key-value form from target content corresponding to the scenario; and
generating an auxiliary material for the video based on the information in the key-value form.

21. The method according to any one of claims 15 to 20, further comprising:
determining a proportion of playback duration required for a scenario corresponding to the video material; and
determining, based on the proportion, whether to trigger the digital human in the corresponding scenario.

22. A training method for a scenario division model, comprising:
obtaining sample material content and a plurality of sample scenarios in the sample material content;
determining a plurality of predicted scenarios from the sample material content based on a preset scenario division model; and
adjusting parameters of the preset scenario division model based on the plurality of sample scenarios and the plurality of predicted scenarios to obtain a trained scenario division model.

23. The training method according to claim 22, wherein the preset scenario division model comprises a discourse semantic segmentation model and a discourse structure analysis model, and wherein the determining a plurality of predicted scenarios from the sample material content based on a preset scenario division model comprises:
processing the sample material content by using the discourse semantic segmentation model and the discourse structure analysis model, to determine a plurality of predicted subtopics in the material content and a predicted structural relationship between the plurality of predicted subtopics; and
dividing the plurality of predicted subtopics into the plurality of predicted scenarios based on the predicted structural relationship.

24. A digital human generation apparatus, comprising:
a first obtaining unit configured to obtain material content;
a first determination unit configured to determine a plurality of scenarios from the material content based on a pre-trained scenario division model, wherein each of the plurality of scenarios corresponds to a content fragment of the material content that has complete semantic information;
a second determination unit configured to: for each of the plurality of scenarios, determine, based on a corresponding content fragment, target content corresponding to the scenario;
a third determination unit configured to determine scenario label information of the scenario based on the corresponding target content; and
a digital human configuration unit configured to configure a digital human specific to the scenario based on the scenario label information.

25. The apparatus according to claim 24, wherein the first obtaining unit is further configured to obtain the material content in at least one of the following manners of:
obtaining the material content based on a web page address; or
obtaining the material content based on a search keyword.

26. The apparatus according to claim 24 or 25, wherein the material content comprises text data and at least one of image data and video data.

27. The apparatus according to any one of claims 24 to 26, wherein the first determination unit comprises:
a first determination subunit configured to determine a plurality of subtopics from the material content through discourse structure analysis and discourse semantic segmentation for the material content, and determine a structural relationship between the plurality of subtopics; and
a first division subunit configured to divide the plurality of subtopics into the plurality of scenarios based on the structural relationship.

28. The apparatus according to claim 27, wherein the second determination unit comprises:
a generation subunit configured to generate first content for the scenario based on a structural relationship between the scenario and a previous scenario.

29. The apparatus according to claim 27 or 28, wherein the second determination unit comprises:
a conversion subunit configured to convert the corresponding content fragment into the corresponding target content based on a pre-trained style conversion model, wherein the style conversion model is obtained through training based on prompt learning.

30. The apparatus according to claim 29, wherein the second determination unit comprises at least one of the following:
a first update subunit configured to perform at least one of text rewriting and text compression on the corresponding content fragment to update the corresponding content fragment; and
a second update subunit configured to perform at least one of text rewriting and text compression on the converted target content to update the corresponding target content.

31. The apparatus according to any one of claims 24 to 30, wherein the third determination unit comprises:
a sentiment analysis subunit configured to perform sentiment analysis on the corresponding target content to obtain the semantic label.

32. The apparatus according to claim 31, wherein the semantic label is used to identify an emotion expressed by the corresponding target content, including: positive, neutral, or negative.

33. The apparatus according to claim 31 or 32, wherein the digital human configuration unit comprises:
a first configuration subunit configured to configure at least one of clothing, a facial expression, and an action of the digital human based on the semantic label.

34. The apparatus according to claim 33, further comprising:
a speech conversion unit configured to convert the target content into speech for the digital human to broadcast.

35. The apparatus according to claim 34, wherein the digital human configuration unit further comprises:
a second configuration subunit configured to configure a tone for the speech of the digital human based on the semantic label.

36. The apparatus according to any one of claims 24 to 35, further comprising:
a holographic image presentation unit configured to present the digital human in a form of a holographic image.

37. The apparatus according to any one of claims 24 to 35, further comprising:
a video presentation unit configured to present the digital human in a form of a video.

38. The apparatus according to claim 37, further comprising:
a retrieval unit configured to: for each of the plurality of scenarios, retrieve a video material related to the scenario based on the material content and target content corresponding to the scenario; and
a combination unit configured to combine the video material with the digital human.

39. The apparatus according to claim 38, wherein the retrieval unit comprises:
a first extraction subunit configured to extract a scenario keyword; and
a first retrieval subunit configured to retrieve a video material related to the scenario based on the scenario keyword.

40. The apparatus according to claim 38 or 39, wherein the retrieval unit comprises:
a second extraction subunit configured to extract a sentence-level keyword; and
a second retrieval subunit configured to retrieve a video material related to the scenario based on the sentence-level keyword.

41. The apparatus according to claim 40, further comprising:
an alignment unit configured to align the retrieved video material with the target content based on the sentence-level keyword.

42. The apparatus according to any one of claims 38 to 41, further comprising:
a fourth determination unit configured to: in response to determining that the video material comprises a specific material, determine an action of the digital human based on a display position of the specific material in the video material.

43. The apparatus according to any one of claims 37 to 42, further comprising:
an extraction unit configured to: for each of the plurality of scenarios, extract information in a key-value form from target content corresponding to the scenario; and
a generation unit configured to generate an auxiliary material for the video based on the information in the key-value form.

44. The apparatus according to any one of claims 38 to 43, further comprising:
a fifth determination unit configured to determine a proportion of playback duration required for a scenario corresponding to the video material; and
a sixth determination unit configured to determine, based on the proportion, whether to trigger the digital human in the corresponding scenario.

45. A training apparatus for a scenario division model, comprising:
a second obtaining unit configured to obtain sample material content and a plurality of sample scenarios in the sample material content;
a seventh determination unit configured to determine a plurality of predicted scenarios from the sample material content based on a preset scenario division model; and
a training unit configured to adjust parameters of the preset scenario division model based on the plurality of sample scenarios and the plurality of predicted scenarios to obtain a trained scenario division model.

46. The training apparatus according to claim 45, wherein the preset scenario division model comprises a discourse semantic segmentation model and a discourse structure analysis model, and wherein the seventh determination unit comprises:
a second determination subunit configured to process the sample material content by using the discourse semantic segmentation model and the discourse structure analysis model, to determine a plurality of predicted subtopics in the material content and a predicted structural relationship between the plurality of predicted subtopics; and
a second division subunit configured to divide the plurality of predicted subtopics into the plurality of predicted scenarios based on the predicted structural relationship.

47. An electronic device, comprising:
at least one processor; and
a memory communicatively connected to the at least one processor, wherein
the memory stores instructions executable by the at least one processor, and the instructions, when executed by the at least one processor, cause the at least one processor to perform the method according to any one of claims 1 to 23.

48. A non-transitory computer-readable storage medium storing computer instructions, wherein the computer instructions are used to cause the computer to perform the method according to any one of claims 1 to 23.

49. A computer program product, comprising a computer program, wherein when the computer program is executed by a processor, the method according to any one of claims 1 to 23 is implemented.
